# EUROPEAN PATENT APPLICATION

(11) **EP 3 352 097 A1**
(43) Date of publication of application: **25.07.2018**
(21) Application number: 17163919.8
(22) Date of filing: 30.03.2017
(51) Int. Cl.: G06F 17/30

(54) **SYSTEM AND METHOD FOR PERFORMING DATA MINING BY PARALLEL DATA CLUSTERING**

(30) Priority: 23.01.2017 IN 201741002577
(71) Applicant: Wipro Limited, 560 035 Karnataka (IN)
(72) Inventor: KASTHURI, Magesh, 631501 Tamilnadu, (IN)
(74) Representative: Finnegan Europe LLP

(57) **Abstract**

This disclosure relates to system and method for system and method for performing data mining by parallel data clustering. In one embodiment, the method comprises generating an initial set of clusters from a plurality of existing node elements based on an object of the data mining. The plurality of existing node elements correspond to a plurality of processed data elements and the plurality of processed data elements relate to a plurality of unprocessed data elements. The method further comprises deriving a plurality of new node elements corresponding to the plurality of unprocessed data elements and based on one or more attributes of each of the plurality of unprocessed data elements, and generating a final set of clusters by processing the plurality of new node elements with respect to the initial set of clusters based on the object of the data mining.

## Description

### Technical Field

This disclosure relates generally to information processing, and more particularly to system and method for performing data mining by parallel data clustering.

### Background

In an increasingly digital world, there is an exponential growth in volume of data as an ever increasing number of users perform an increasing number of data transactions. Many a times these large and complex datasets, also referred to as 'Big Data', need to be analyzed or mined so as to uncover hidden patterns and unknown correlations. As will be appreciated, in a business world, such findings may help identify market trends, customer preferences, and other useful information which in turn may facilitate developing effective marketing strategies, identifying new business opportunities, delivering better customer service, and so forth.

However, big data analytics or data mining involves computationally intensive algorithms that are time consuming and costly. An important computationally intensive step in a data mining process is structuring these massive volumes of data during pre-processing step of the data mining process. Such data structuring procedure may involve clustering a set of data points into logical groups or clusters so as to enable better mining. These clusters help identifying similarity among data points within each clusters, and dissimilarity among different clusters. The data points are generally in high dimensional space. For example, clustering algorithm may be broadly employed as spectral algorithm in social networking platforms, where a reference of contact is used and mined further for various combinations of suggested friends and lookups. However, clustering algorithms are inefficient in handling new datasets with respect to historical datasets.

For example, in a big data analysis involving customer relationship data (e.g., banking, insurance), time consuming re-processing of the data needs to be performed whenever a new data gets added. If any manual tuning is performed to reduce the re-processing time, the reprocessing time is still higher and increases for every such manual tuning. The impact of this limitation is most felt when the frequency of such re-processing increases (e.g., performing regulatory tasks at regular interval, handling dynamically changing customer preferences, etc.).

### SUMMARY

In one embodiment, a method for performing data mining is disclosed. In one example, the method comprises generating an initial set of clusters from a plurality of existing node elements based on an object of the data mining. The plurality of existing node elements correspond to a plurality of processed data elements and the plurality of processed data elements relate to a plurality of unprocessed data elements. The method further comprises deriving a plurality of new node elements corresponding to the plurality of unprocessed data elements and based on one or more attributes of each of the plurality of unprocessed data elements. The method further comprises generating a final set of clusters by processing the plurality of new node elements with respect to the initial set of clusters based on the object of the data mining.

In one embodiment, a system for performing data mining is disclosed. In one example, the system comprises at least one processor and a memory communicatively coupled to the at least one processor. The memory stores processor-executable instructions, which, on execution, cause the processor to generate an initial set of clusters from a plurality of existing node elements based on an object of the data mining. The plurality of existing node elements correspond to a plurality of processed data elements and the plurality of processed data elements relate to a plurality of unprocessed data elements. The processor-executable instructions, on execution, further cause the processor to derive a plurality of new node elements corresponding to the plurality of unprocessed data elements and based on one or more attributes of each of the plurality of unprocessed data elements. The processor-executable instructions, on execution, further cause the processor to generate a final set of clusters by processing the plurality of new node elements with respect to the initial set of clusters based on the object of the data mining.

In one embodiment, a non-transitory computer-readable medium storing computer-executable instructions for performing data mining is disclosed. In one example, the stored instructions, when executed by a processor, cause the processor to perform operations comprising generating an initial set of clusters from a plurality of existing node elements based on an object of the data mining. The plurality of existing node elements correspond to a plurality of processed data elements and the plurality of processed data elements relate to a plurality of unprocessed data elements. The operations further comprise deriving a plurality of new node elements corresponding to the plurality of unprocessed data elements and based on one or more attributes of each of the plurality of unprocessed data elements. The operations further comprise generating a final set of clusters by processing the plurality of new node elements with respect to the initial set of clusters based on the object of the data mining.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for performing data mining by parallel data clustering in accordance with some embodiments of the present disclosure.
**FIG. 2** is a functional block diagram of a clustering engine in accordance with some embodiments of the present disclosure.
**FIG. 3** is a flow diagram of an exemplary process for performing data mining by parallel data clustering in accordance with some embodiments of the present disclosure.
**FIG. 4** is a flow diagram of a detailed exemplary process for parallel data clustering in accordance with some embodiments of the present disclosure.
**FIG. 5** is a flow diagram of further detailed exemplary process for parallel data clustering in accordance with some embodiments of the present disclosure.
**FIG. 6** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

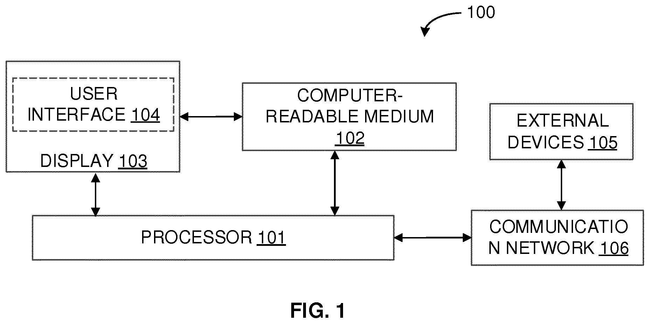

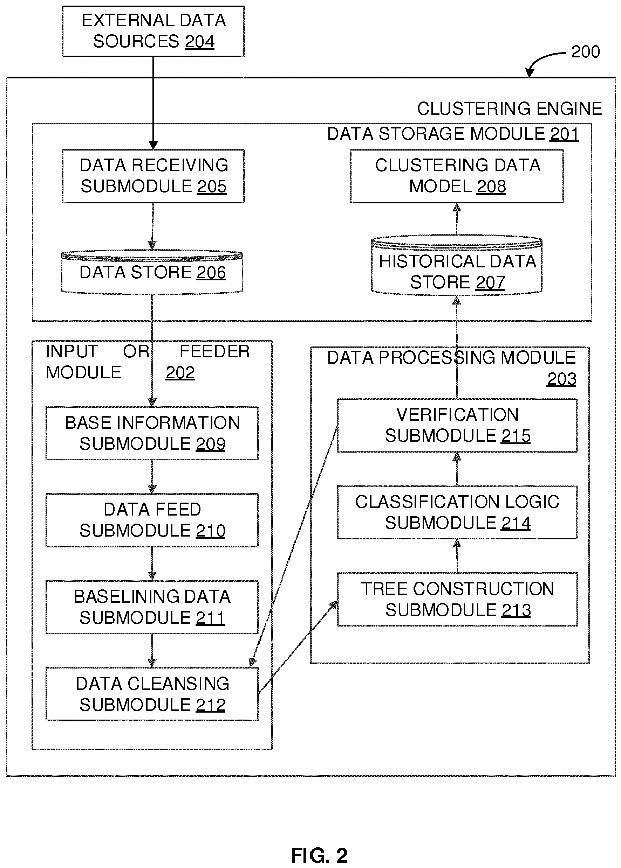

Referring now to FIG. 1, an exemplary system 100 for performing data mining by parallel data clustering is illustrated in accordance with some embodiments of the present disclosure. In particular, the system 100 (e.g., laptop, netbook, or any other computing device) implements a clustering engine for parallel data clustering. As will be described in greater detail in conjunction with FIG. 2, the clustering engine comprises multiple modules configured to process input datasets so as to dynamically create a set of clusters for subsequent data mining. The clustering engine generates an initial set of clusters from a plurality of existing node elements based on an object of the data mining, derives a plurality of new node elements corresponding to the plurality of unprocessed data elements and based on one or more attributes of each of the plurality of unprocessed data elements, and generates a final set of clusters by processing the plurality of new node elements with respect to the initial set of clusters based on the object of the data mining. The plurality of existing node elements correspond to a plurality of processed data elements and the plurality of processed data elements relate to a plurality of unprocessed data elements.

The system 100 comprises one or more processors 101, a computer-readable medium (e.g., a memory) 102, and a display 103. The computer-readable storage medium 102 stores instructions that, when executed by the one or more processors 101, cause the one or more processors 101 to dynamically create clusters for subsequent data mining in accordance with aspects of the present disclosure. The computer-readable storage medium 102 may also store various data (e.g., input datasets, processed data elements, unprocessed data elements, existing node elements, new node elements, attributes of data elements, initial clusters, final clusters, structured tree, object of data mining, etc.) that may be captured, processed, and/or required by the system 100. The system 100 interacts with a user via a user interface 104 accessible via the display 103. The system 100 may also interact with one or more external devices 105 over a communication network 106 for sending or receiving various data. The external devices 105 may include, but are not limited to, a remote server, a digital device, or another computing system.

Referring now to FIG. 2, a functional block diagram of the clustering engine 200 implemented by the system 100 of FIG. 1 is illustrated in accordance with some embodiments of the present disclosure. The clustering engine 200 may include various modules that perform various functions so as to dynamically and parallel create a set of clusters for subsequent data mining. In some embodiments, the clustering engine 200 comprises a data storage module 201, an input or feeder module 202, and a data processing module 203.

The data storage module 201 receives input dataset from various external data sources 204 via a data receiving submodule 205 and stores the received raw input dataset in a data store 206. In some embodiments, the raw input dataset is processed to identify a delta or marginal change when re-processing needs to be performed. The data storage module 201 further includes a historical data store 207 that stores processed historical data. The historical data store 207 is therefore a knowledge base of processed historical data that stores the previously clustered nodes in a predefined clustering data model 208.

The input or feeder module 202 receives the input dataset for subsequent processing. The input or feeder module 202 comprises a base information submodule 209 that receives raw input dataset from the data store 206. In other words, the base information submodule 209 receives feed from external data sources 204 which is provided to the clustering engine 200 directly or through the data mining system 100. The input or feeder module 202 further comprises a data feed submodule 210 to re-arrange the raw input dataset (i.e., input feed) for subsequent processing. The input or feeder module 202 further comprises a baselining data submodule 211 so as to enable a user or a computing system to provide information on an object of the data mining. Thus, in some embodiments, a user (e.g., data analyst, marketing personnel) may decide what kind of data processing needs to be performed. Alternatively, in some embodiments, a BOT, or a machine learning algorithm, or any other connected system (e.g., a computer readable media (CRM) system, an enterprise resource planning (ERP) system, etc.) may provide object of the data mining. The input or feeder module 202 further comprises a data cleansing submodule 212 that helps minimize the time consumption of data processing during clustering and therefore during data mining. In some embodiments, the data cleansing submodule 212 performs column filtering so as to select attributes (i.e., fields) that is relevant to the object of the data mining.

The data processing module 203 processes the input dataset (i.e., input feed) received from the input or feeder module 202. The data processing module 203 comprises a tree construction submodule 213 that construct tree or generates cluster from the cleansed data received from the data cleansing submodule 212. The tree construction submodule 213 performs parallel operation where chunks of cleansed data are processed so as to construct a tree and/or prepare one or more clusters. The data processing module 203 further comprises a classification logic submodule 214 that decides how to re-arrange or re-group the tree based on data relation. It should be noted that the data relation is decided by the baselining data submodule 211 based on the object of the data mining. Thus, in some embodiments, the data relation may be decided by user or another computing system. The data processing module 203 further comprises a verification submodule 215 that verifies refined data nodes in the tree. Thus, after the cleansed data is sorted and re-arranged, the verification submodule 215 sorts (or arranges) the nodes and converts the same into a data lake for storage in the historical data store 207 and/or for subsequent mining or re-processing.

It should be noted that, in some embodiments, the training dataset is prepared based on pre-defined factors related to the dataset. The pre-defined factors may include, but are not limited to, attribute type, attribute classification, attribute value range, attribute uniqueness, and attribute filtering possibility. As stated above, the historical processed data (i.e., clustered node) may be stored in the knowledge base which may be used for further processing of delta record change (reloaded data) without re-doing the entire dataset.

By way of example, the input or feeder module 202 receives the base information data, re-arranges the data in input feed, determines the object of processing, and cleanses the data. The cleansed data is then transferred to data processing module 203 for analytical processing. The data processing module 203 prepares clusters or constructs tree structure from the cleaned data. The cleansed data may be then transferred into classification logic so as to re-arrange (or re-group) the clusters or tree based on data relation. The refined classification logic data (i.e., the cleansed data that has been sorted and re-arranged) is then verified in conjunction with data cleansing submodule 212 under input or feeder module 202. The verified data may then be transferred to data storage module 201 for storage in the historical data store 207. This historical data store 207 is connected to clustering data model 208, and stores the clustered nodes into a pre-defined data model in the store. This stored data may then be used knowledge base for data processing.

As will be appreciated by those skilled in the art, all such aforementioned modules and submodules may be represented as a single module or a combination of different modules. Further, as will be appreciated by those skilled in the art, each of the modules may reside, in whole or in parts, on one device or multiple devices in communication with each other.

Further, as will be appreciated by one skilled in the art, a variety of processes may be employed for data mining by employing parallel data clustering. For example, the exemplary system 100 may create the cluster for subsequent data mining by the processes discussed herein. In particular, as will be appreciated by those of ordinary skill in the art, control logic and/or automated routines for performing the techniques and steps described herein may be implemented by the system 100, either by hardware, software, or combinations of hardware and software. For example, suitable code may be accessed and executed by the one or more processors on the system 100 to perform some or all of the techniques described herein. Similarly application specific integrated circuits (ASICs) configured to perform some or all of the processes described herein may be included in the one or more processors on the system 100.

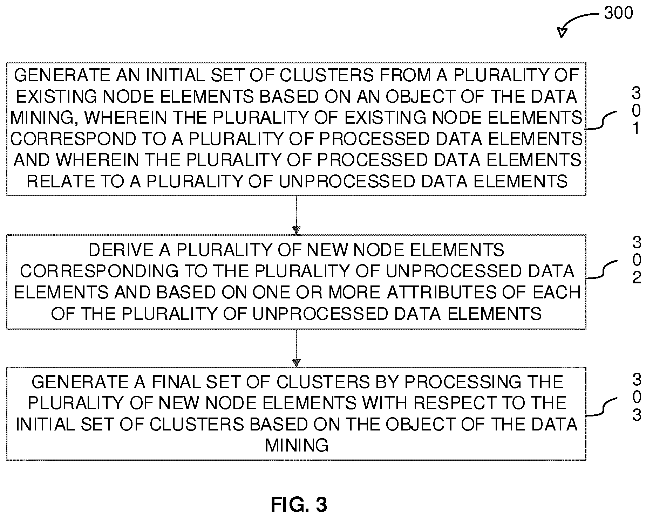

For example, referring now to FIG. 3, exemplary control logic 300 for performing data mining by parallel data clustering via a system, such as system 100, is depicted via a flowchart in accordance with some embodiments of the present disclosure. As illustrated in the flowchart, the control logic 300 includes the steps of generating an initial set of clusters from a plurality of existing node elements based on an object of the data mining at step 301, deriving a plurality of new node elements corresponding to the plurality of unprocessed data elements and based on one or more attributes of each of the plurality of unprocessed data elements at step 302, and generating a final set of clusters by processing the plurality of new node elements with respect to the initial set of clusters based on the object of the data mining at step 303. It should be noted that the plurality of existing node elements correspond to a plurality of processed data elements and the plurality of processed data elements relate to a plurality of unprocessed data elements.

In some embodiments, the plurality of unprocessed data elements is received from one or more data sources. Additionally, in some embodiments, the object of the data mining is received from a user or a computing system. Further, in some embodiment, the one or more attributes comprise a data element type, a data element classification, a data element value range a data element uniqueness and a filtering possibility for data element.

In some embodiments, the control logic 300 further includes the step of identifying the plurality of processed data elements based on the plurality of new data elements from a historical data store. Additionally, in some embodiments, the control logic 300 further includes the step of identifying the plurality of existing node elements based on the plurality of processed data elements from the historical data store, or preparing the plurality of existing node elements based on the plurality of processed data elements. Moreover, in some embodiments, the control logic 300 further includes the step of validating the final set of clusters, and storing the plurality of new node elements in a historical data store.

In some embodiments, deriving the plurality of new node elements at step 302 comprises processing the plurality of unprocessed data elements to determine the one or more attributes, and one or more relationships among the one or more attributes. Additionally, in some embodiments, generating the initial set of clusters at step 301 comprises constructing a tree from the plurality of existing node elements based on a distance between each of the plurality of existing node elements and each of the remaining of the plurality of existing node elements. Further, in some embodiments, generating the final set of clusters at step 303 comprises reconstructing the tree to accommodate the plurality of new node elements based on a distance between each of the plurality of new node elements and each of the plurality of existing node elements.

In some embodiments, generating the final set of clusters at step 303 comprises determining a distance between each of the plurality of new node elements and each of the plurality of existing node elements within each of the initial set of clusters, replacing one or more of the plurality of existing node elements with one or more of the plurality of new node elements based on the corresponding distance, and determining a new position for the one or more of the plurality of existing node elements among the initial set of clusters.

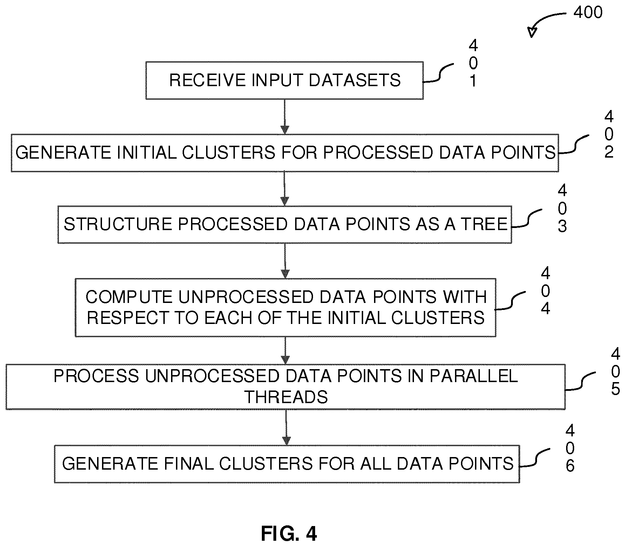

Referring now to FIG. 4, exemplary control logic 400 for parallel data clustering is depicted in greater detail via a flowchart in accordance with some embodiments of the present disclosure. As illustrated in the flowchart, the control logic 400 includes the step of receiving input dataset at 401. As will be appreciated, the input dataset may include previous processed data from the historical data store and unprocessed data from the data store which in turn is received from one or more external sources. As stated above, the processed data may be logically related to the unprocessed data. For example, a new customer related data for an organization may be mapped with the existing customer related data for the organization and both may be provided to the clustering engine for parallel data clustering. In some embodiments, the received data may be re-arranged for subsequent processing. Additionally, in some embodiments, the control logic 400 may receive an input on kind of data processing required for the input dataset from a user or another computing system, and perform data cleansing (e.g., column filtering) before analytical processing.

After cleansing the data, the control logic 400 starts another operation in parallel where chunks of cleansed data is processed so as to generate clusters and/or construct a tree. Additionally, the tree may be re-arranged (or re-grouped) based on a logic. It should be noted that, in some embodiments, the logic of how to re-arrange or re-group the tree may be based on a data relation. Thus, the control logic 400 includes the step of generating initial clusters for processed data points at step 402. It should be noted that, in some embodiments, the initial clusters are generated based on the input on kind of data processing required. The control logic 400 further includes the step of structuring processed data points as a tree at step 403. Thus, the initial clusters may be structured as a tree for computational purposes.

Additionally, the control logic 400 includes the step of computing unprocessed data points with respect to each of the initial clusters at step 404. As will be appreciated, such computation involves computing distance between each of the unprocessed data points and each of the processed data points in each of the initial clusters. Further, the control logic 400 includes the step of processing the unprocessed data points in parallel threads at step 405. Thus, the computation of distance for each of the unprocessed data points with respect to each of the clusters may be performed in parallel. Additionally, the processing involves replacing the existing processed data points in the initial clusters with the unprocessed data points based on the distance. Thus, in some embodiments, if a distance between a given node (say, first node) element (corresponding to the processed data point) in the tree, and a new node element (corresponding to the unprocessed data point) is less than the distance between the first node and another node (say, second node) element, then the second node element in the tree is replaced with the new node element. The control logic 400 further includes the step of generating final clusters for all the data points at step 406. The distance of each of the replaced existing node elements is computed with each of the node elements in the final clusters and their new position is determined within and among each of the final clusters.

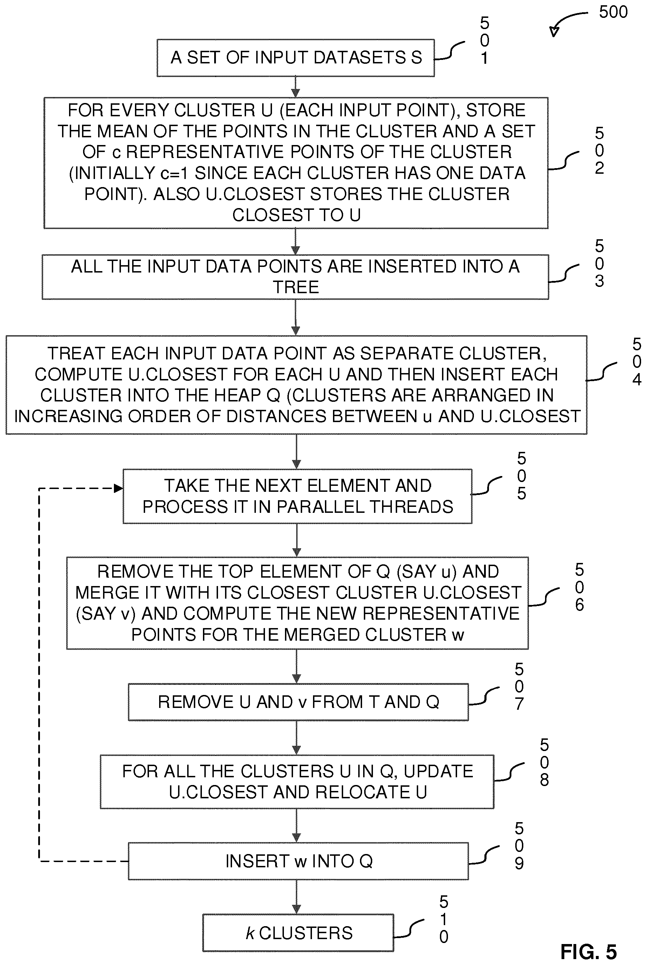

Referring now to FIG. 5, exemplary control logic 500 for parallel data clustering is depicted in further greater detail via a flowchart in accordance with some embodiments of the present disclosure. As illustrated in the flowchart, at step 501, a set of input dataset S comprising of all the processed and unprocessed data elements is received. At step 502, node elements U is prepared with c as 1 initially. Additional node elements may then be added to U which increases the running value of c. It should be noted that U is a cluster node to be constructed. As noted above, there may be parallel construction of multiple such node elements (eg: U₁, U₂, U₃, etc.). Thus, for every cluster U (i.e., each input data point), the mean of the data points along with a set of c representative data points may be stored in the cluster. Initially, c is equal to 1 as each cluster has one data point. Additionally, at step 502, U.closest may be prepared that stores the cluster closest to U. At step 503, a tree T is constructed from the set of U clusters. All the input data points are inserted into the tree T. It should be noted that the tree T is constructed in parallel with all the node element groups which decides how to organize the node element group (ordering).

At step 504, each element is matched with a node element to determine if it can be attached to it or not. If it matches to the node element based on the computed distance c of the element (also referred to as depth of the node element in the cluster), then the element else is attached to it, else next appropriate node element group is considered to determine the match and the attachment. Thus, each input data point is treated as separate cluster and U.closest is computed for each U. Each cluster is then inserted into a heap Q. The heap Q comprises cluster nodes U arranged in sorted order based on distance of nodes. In some embodiments, clusters are arranged in an increasing order of distances between u and U.closest. It should be noted that u is the element to detach from the node element group U due to other matching element v. The node element groups U are now ready to handle rest of the elements.

At step 505, each element is processed with respect to each node element group in parallel threads. At step 506, if a new element matches closer to an existing element v, then the existing element v is removed and merged to another matching cluster w. It should be noted that w is merged cluster detached from u. Thus, the top element of the heap Q (say u) is removed and merged with its closest cluster U.closest (say v). The new representative data points may then be computed for the merged cluster w. At step 507, if element group ordering changes due to new element addition, then rearrange the cluster U in appropriate position. Similarly, rearrange the same in the tree T which runs in parallel. Thus, in some embodiments, U and v may be removed from T and Q respectively. At step 508, the heap Q is updated with cluster groups U. Thus, for all the clusters U in the heap Q, U.closest is updated and the U is relocated. At step 509, the detached element in step 506 may also be re-organized with respect to cluster w in the heap Q. Thus, cluster w is inserted in the heap Q. As will be appreciated, the steps 505 through 509 may be repeated until all input from S is processed. Once all the data points have been processed, at step 510, a set of k output cluster nodes is prepared as tree nodes for subsequent processing (e.g., re-processing with new data points, data mining, etc.).

As will be also appreciated, the above described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

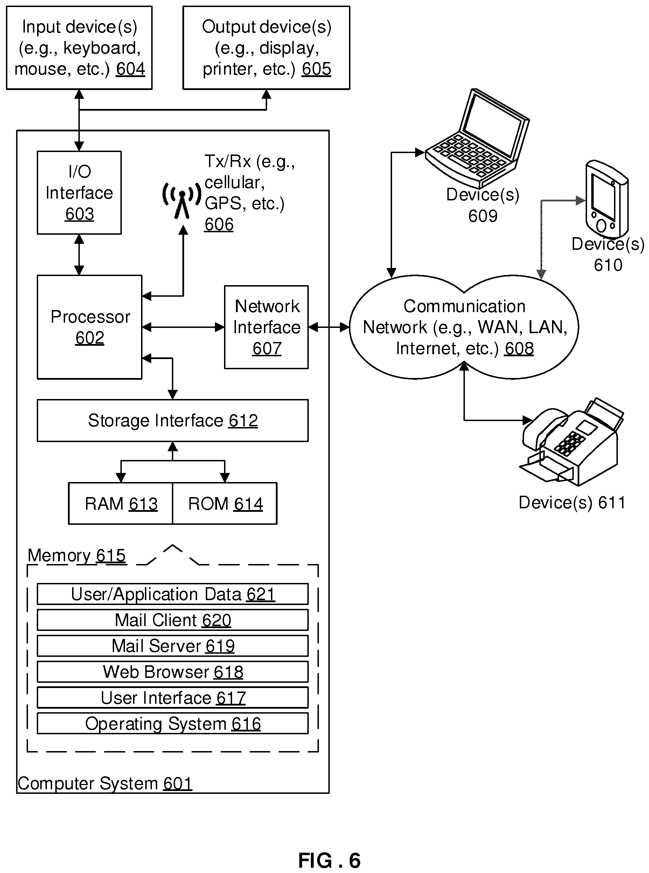

The disclosed methods and systems may be implemented on a conventional or a general-purpose computer system, such as a personal computer (PC) or server computer. Referring now to FIG. 6, a block diagram of an exemplary computer system 601 for implementing embodiments consistent with the present disclosure is illustrated. Variations of computer system 601 may be used for implementing system 100 for performing data mining by parallel data clustering. Computer system 601 may comprise a central processing unit ("CPU" or "processor") 602. Processor 602 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more input/output (I/O) devices via I/O interface 603. The I/O interface 603 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 603, the computer system 601 may communicate with one or more I/O devices. For example, the input device 604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, altimeter, gyroscope, proximity sensor, or the like), stylus, scanner, storage device, transceiver, video device/source, visors, etc. Output device 605 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11 a/b/g/n, Bluetooth, FM, global positioning system (GPS), 2G/3G HSDPA/HSUPA communications, etc.

In some embodiments, the processor 602 may be disposed in communication with a communication network 608 via a network interface 607. The network interface 607 may communicate with the communication network 608. The network interface may employ connection protocols including, without limitation, direct connect, Ethernet (e.g., twisted pair 10/100/1000 Base T), transmission control protocol/internet protocol (TCP/IP), token ring, IEEE 802.11 a/b/g/n/x, etc. The communication network 608 may include, without limitation, a direct interconnection, local area network (LAN), wide area network (WAN), wireless network (e.g., using Wireless Application Protocol), the Internet, etc. Using the network interface 607 and the communication network 608, the computer system 601 may communicate with devices 609, 610, and 611. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 602 may be disposed in communication with one or more memory devices (e.g., RAM 613, ROM 614, etc.) via a storage interface 612. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 616, user interface application 617, web browser 618, mail server 619, mail client 620, user/application data 621 (e.g., any data variables or data records discussed in this disclosure), etc. The operating system 616 may facilitate resource management and operation of the computer system 601. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 601 may implement a web browser 618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 601 may implement a mail server 619 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 601 may implement a mail client 620 stored program component. The mail client may be a mail viewing application, such as Apple Mail, Microsoft Entourage, Microsoft Outlook, Mozilla Thunderbird, etc.

In some embodiments, computer system 601 may store user/application data 621, such as the data, variables, records, etc. (e.g., input datasets, processed data elements, unprocessed data elements, existing node elements, new node elements, attributes of data elements, initial clusters, final clusters, structured tree, object of data mining, and so forth) as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

As will be appreciated by those skilled in the art, the techniques described in the various embodiments discussed above provide for dynamic and parallel clustering of dataset for data analytics. The techniques takes into consideration historical processed data during re-processing or cluster preparation for data analytics. This enables to process the dataset for volume as well as delta changes without re-processing the entire dataset. In other words, the techniques enables processing of only new datasets while minimizing or avoiding repeated processing of existing dataset by leveraging historical knowledge base and clustered data store. Additionally, the techniques automatically processes dataset in parallel threads. Further, in some embodiments, the techniques set boundary conditions through pre-defined attribute factors (e.g., attribute type, attribute classification, attribute value range, attribute uniqueness, attribute filtering possibility, and so forth) for data processing. The techniques, described in the various embodiments discussed above, is therefore efficient and cost-effective and provides higher benefit in terms of cost and time in data mining processing without compromising the efficiency and accuracy in expected result.

Additionally, the techniques described in the various embodiments discussed above helps in improvising data mining solution for 'Big Data' application by reducing the computational complexity and therefore increasing the computational efficiency. This is achieved by relation building based on historical data processing, clustering data model preparation, and data node and tree structuring based on a unique and low cost parallel clustering algorithm. In comparison to the existing standard spectral clustering technique such as spatial clustering or K-means clustering, the parallel data clustering techniques described in the various embodiments discussed above provide for a tree based clustering, account for large number of attributes, automatically computes cluster depth, have a depth and node based hierarchy, and have a ordered node based cluster assignment.

The specification has described system and method for performing data mining by parallel data clustering. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for performing data mining, the method comprising:
generating, by a clustering engine, an initial set of clusters from a plurality of existing node elements based on an object of the data mining, wherein the plurality of existing node elements correspond to a plurality of processed data elements and wherein the plurality of processed data elements relate to a plurality of unprocessed data elements;
deriving, by the clustering engine, a plurality of new node elements corresponding to the plurality of unprocessed data elements and based on one or more attributes of each of the plurality of unprocessed data elements; and
generating, by the clustering engine, a final set of clusters by processing the plurality of new node elements with respect to the initial set of clusters based on the object of the data mining.

2. The method of claim 1, wherein the plurality of unprocessed data elements is received from one or more data sources, and wherein the object of the data mining is received from a user or a computing system.

3. The method of claim 1 or 2, further comprising:
identifying the plurality of processed data elements based on the plurality of new data elements from a historical data store; and
identifying the plurality of existing node elements based on the plurality of processed data elements from the historical data store, or preparing the plurality of existing node elements based on the plurality of processed data elements.

4. The method of claim 1, 2, or 3, wherein deriving the plurality of new node elements comprises processing the plurality of unprocessed data elements to determine the one or more attributes, and one or more relationships among the one or more attributes.

5. The method of any preceding claim, wherein generating the initial set of clusters comprises constructing a tree from the plurality of existing node elements based on a distance between each of the plurality of existing node elements and each of the remaining of the plurality of existing node elements.

6. The method of claim 5, wherein generating the final set of clusters comprises reconstructing the tree to accommodate the plurality of new node elements based on a distance between each of the plurality of new node elements and each of the plurality of existing node elements.

7. The method of any preceding claim, wherein generating the final set of clusters comprises:
determining a distance between each of the plurality of new node elements and each of the plurality of existing node elements within each of the initial set of clusters;
replacing one or more of the plurality of existing node elements with one or more of the plurality of new node elements based on the corresponding distance; and
determining a new position for the one or more of the plurality of existing node elements among the initial set of clusters.

8. The method of any preceding claim, further comprising:
validating the final set of clusters; and
storing the plurality of new node elements in a historical data store.

9. The method of any preceding claim, wherein the one or more attributes comprise a data element type, a data element classification, a data element value range a data element uniqueness and a filtering possibility for data element.

10. A system for performing data mining, the system comprising:
at least one processor; and
a memory for storing instructions that, when executed by the at least one processor, cause the at least one processor to perform operations comprising the method of any preceding claim.

11. A non-transitory computer-readable medium storing instructions for performing data mining, wherein upon execution of the instructions by one or more processors, the processors perform operations comprising the method of any of claims 1 - 9.
